# DEMANDE DE BREVET EUROPEEN

(11) **EP 1 791 249 A1**
(43) Date de publication de la demande: **30.05.2007**
(21) Numéro de dépôt: 06124599.9
(22) Date de dépôt: 22.11.2006
(51) Int. Cl.: H02P 1/42

(54) **Commande d'un triac pour démarrage d'un moteur**

(30) Priorité: 23.11.2005 FR 0553570
(71) Demandeur: STMICROELECTRONICS SA, 92120 Montrouge (FR)
(72) Inventeur: Gonthier, Laurent, 37000 Tours (FR)
(74) Mandataire: de Beaumont, Michel

(57) **Abrégé**

L'invention concerne un procédé et un circuit de commande d'un triac (T) destiné à être connecté en série avec un élément résistif à coefficient de température positif (3) ou au moins capacitif, et un enroulement (Ls) de démarrage d'un moteur asynchrone, pour alimentation par une tension alternative (Vac), l'invention consistant à : détecter une tension (V53) représentative de la tension (V3) aux bornes de l'association en série de l'élément résistif (3) et du triac (T) ; comparer cette tension détectée par rapport à un seuil (DZ1) ; et bloquer une remise en conduction du triac (T) quand ledit seuil est dépassé.

## Description

### Domaine de l'invention

La présente invention concerne de façon générale les circuits de démarrage des moteurs asynchrones alimentés par une tension alternative et, plus particulièrement, un circuit de commande d'un triac actionnant un enroulement auxiliaire d'un moteur asynchrone pour son démarrage.

Un exemple d'application de la présente invention concerne les compresseurs qui comportent généralement de tels moteurs asynchrones alimentés par la tension alternative du secteur.

### Exposé de l'art antérieur

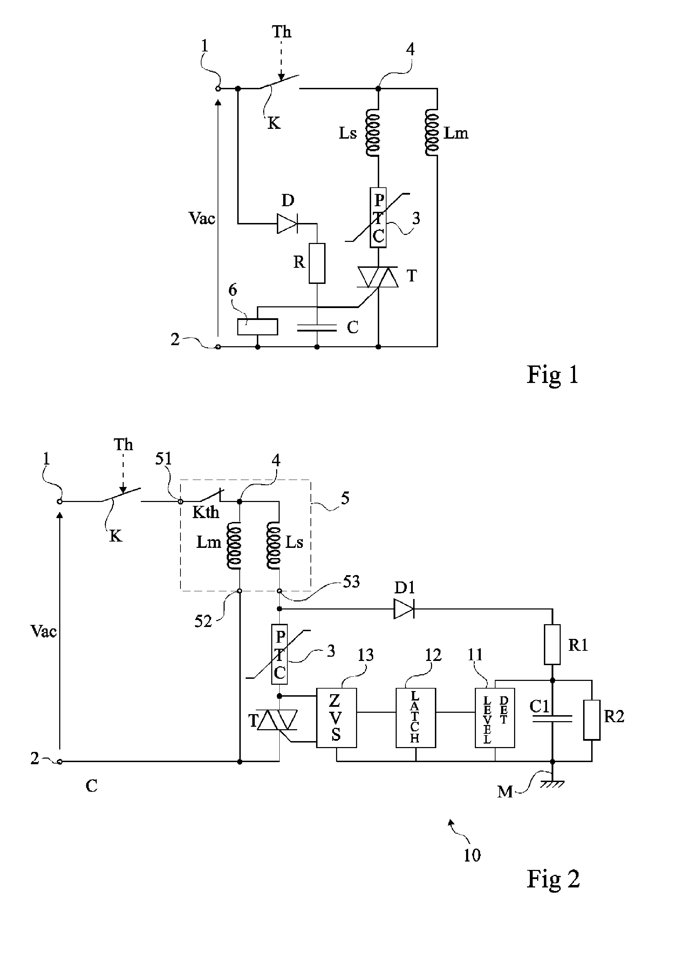

La figure 1 représente, de façon très schématique, un exemple classique de circuit de commande d'enroulements d'un moteur asynchrone. Pour simplifier, le moteur a été symbolisé par un enroulement principal Lm et un enroulement auxiliaire Ls servant au démarrage. L'enroulement principal Lm est destiné à être alimenté par une tension alternative Vac appliquée entre deux bornes 1 et 2. Un interrupteur K (par exemple, commandé par thermostat Th, par l'utilisateur, etc.) est intercalé en série avec l'enroulement Lm entre les bornes 1 et 2.

Pour démarrer un moteur asynchrone, il est nécessaire de créer un couple au moyen d'un déphasage ou en injectant un courant supérieur au courant absorbé par l'enroulement Lm. C'est le rôle de l'enroulement auxiliaire Ls, connecté en parallèle avec l'enroulement principal.

Cet enroulement auxiliaire ou de démarrage Ls n'est pas destiné à fonctionner en permanence. C'est pourquoi, il est généralement associé à un élément résistif 3 à coefficient de température positif (PTC) dont la résistance augmente avec la température. Cet élément 3 permet de déconnecter l'enroulement auxiliaire une fois que le moteur a démarré, le courant circulant alors dans l'enroulement auxiliaire étant suffisant pour que la résistance de l'élément 3 puisse être considérée comme ouvrant la branche de l'enroulement auxiliaire.

Pour éviter que l'élément 3 n'engendre une dissipation permanente dans le circuit, il est généralement associé en série avec un triac T. Ainsi, comme l'illustre la figure 1, l'enroulement auxiliaire Ls en série avec l'élément 3 et le triac T sont reliés en parallèle avec l'enroulement principal Lm. La gâchette du triac T est reliée au point milieu d'une association en série d'une résistance R avec un condensateur C, connectée entre les bornes 1 et 2, une diode de redressement D étant intercalée entre la borne 1 et la résistance R avec son anode côté borne 1.

Le circuit de la figure 1 est décrit dans le document EP-A-0 571 956.

Lorsqu'une tension Vac est appliquée entre les bornes 1 et 2 et que l'interrupteur K est fermé, le courant qui circule dans l'enroulement Ls aide à fournir du couple au moteur pour qu'il démarre. En parallèle, le triac T est rendu passant par le courant de gâchette que lui fournissent la diode D et la résistance R. Un circuit 6 sert à décharger le condensateur C pour bloquer le triac T après un certain temps, ce qui déconnecte l'enroulement Ls. Ce temps fixé par le circuit 6 correspond au temps de démarrage. Le temps de démarrage (conduction de l'enroulement Ls) est fixé par la constante de temps apportée par la résistance R et le condensateur C. Dans un tel circuit, l'élément résistif 3 à coefficient de température positif sert plutôt de sécurité pour le cas où le triac T serait défectueux.

Un inconvénient du circuit de la figure 1 est qu'il ne sert qu'une fois, lors de la mise sous tension du montage. En raison de la connexion directe de la diode D à la borne 1, il ne sert plus lorsque le thermostat coupe le moteur, le condensateur C restant chargé.

Même si le circuit de déclenchement (diode D, résistance R, condensateur C) était connecté en aval de l'interrupteur K (anode de la diode D connectée entre l'interrupteur K et les enroulements Lm et Ls), l'absence de circuit de décharge du condensateur C nuirait au redémarrage du moteur, suite à une ouverture-fermeture du thermostat.

En outre, le plus souvent, un interrupteur normalement fermé (non représenté en figure 1) servant de protection thermique (connu sous la dénomination KLIXON) est intercalé entre le point 4 d'interconnexion des enroulements Ls et Lm et l'interrupteur K. Cet interrupteur de protection est en général interne au moteur de sorte que le point 4 n'est, en pratique, pas accessible. Dans un tel cas, le circuit de la figure 1 ne permet pas de redémarrer automatiquement le moteur à la fermeture de l'interrupteur KLIXON, après avoir subi une ouverture de protection thermique.

On connaît également des montages (par exemple issus du document US-5 989 289) dans lesquels un deuxième élément résistif à coefficient de température positif est prévu pour alimenter la gâchette du triac. Un inconvénient de ce montage est que l'amorçage est tardif dans le cas où le deuxième élément résistif chauffe, ce qui engendre du bruit électromagnétique. Un autre inconvénient de ce type de montage est une conduction monoalternance.

### Résumé de l'invention

La présente invention vise à pallier tout ou partie des inconvénients des circuits connus de commande d'un triac servant à déconnecter un enroulement auxiliaire d'un moteur une fois son démarrage effectué.

L'invention vise plus particulièrement à proposer une solution réamorçable, c'est-à-dire permettant des redémarrages successifs du moteur sans engendrer de dissipation thermique excessive dans un élément résistif.

L'invention vise également à proposer une solution intégrable.

L'invention vise également à proposer une solution compatible avec le fonctionnement d'une protection thermique rendant l'une des bornes des enroulements du moteur non directement accessible.

Pour atteindre tout ou partie de ces objets ainsi que d'autres, la présente invention prévoit un circuit de commande d'un triac destiné à être connecté en série avec un élément résistif à coefficient de température positif ou au moins capacitif, et un enroulement de démarrage d'un moteur asynchrone pour alimentation par une tension alternative, comportant :
un circuit de détection d'une tension représentative de la tension aux bornes de l'association en série dudit élément et du triac, et de comparaison de cette tension par rapport à un seuil ; et
un circuit de blocage d'une remise en conduction du triac quand ledit seuil est dépassé.

Selon un mode de réalisation de la présente invention, ledit élément est une résistance à coefficient de température positif.

Selon un mode de réalisation de la présente invention, le circuit comporte en outre un circuit de commande du triac au zéro de tension, commandé par ledit circuit de blocage.

Selon un mode de réalisation de la présente invention, ledit circuit de blocage mémorise l'information comme quoi ledit seuil est dépassé.

Selon un mode de réalisation de la présente invention, ledit circuit de détection et de comparaison comporte :
un pont diviseur résistif recevant ladite tension représentative de la tension aux bornes de l'association en série du triac et dudit élément, redressée en mono alternance ; et
une diode Zener dont la tension seuil fixe le déclenchement du circuit de blocage.

Selon un mode de réalisation de la présente invention, le circuit de blocage comporte un interrupteur choisi parmi un transistor MOS, un thyristor à gâchette de cathode, un transistor bipolaire, pour connecter la gâchette du triac à la masse.

Selon un mode de réalisation de la présente invention, ledit circuit de blocage est dimensionné pour mémoriser le blocage pendant au moins deux alternances de la tension d'alimentation.

La présente invention prévoit également un circuit de commande d'un moteur asynchrone pourvu d'un enroulement principal et d'un enroulement auxiliaire de démarrage, comportant au moins un interrupteur d'alimentation en série avec lesdits enroulements, et un triac en série avec un élément résistif à coefficient de température positif, ou au moins capacitif, et l'enroulement auxiliaire, le circuit de commande du moteur comportant un circuit de commande du triac.

La présente invention prévoit également un procédé de commande d'un triac destiné à être connecté en série avec un élément résistif à coefficient de température positif ou au moins capacitif, et un enroulement de démarrage d'un moteur asynchrone, pour alimentation par une tension alternative, comportant les étapes de :
détecter une tension représentative de la tension aux bornes de l'association en série dudit élément et du triac ;
comparer cette tension détectée par rapport à un seuil ; et
bloquer une remise en conduction du triac quand ledit seuil est dépassé.

Selon un mode de mise en oeuvre de la présente invention, l'information comme quoi ledit seuil est dépassé est mémorisée pendant au moins deux alternances de la tension d'alimentation pour maintenir le blocage du triac.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente un exemple classique de circuit de commande d'un triac servant au démarrage d'un moteur asynchrone du type auquel s'applique la présente invention ;
la figure 2 représente, de façon très schématique et sous forme de blocs, un mode de réalisation d'un circuit de commande d'un triac dans un circuit de démarrage d'un moteur asynchrone selon la présente invention ;
la figure 3 est un schéma électrique détaillé d'un exemple de réalisation du circuit de commande de la figure 2 ; et
la figure 4 représente une variante du circuit de la figure 3.

De mêmes éléments ont été désignés par de mêmes références aux différentes figures. Pour des raisons de clarté, seuls les éléments qui sont utiles à la compréhension de l'invention ont été représentés aux figures et seront décrits par la suite. En particulier, les détails constitutifs d'un moteur asynchrone n'ont pas tous été représentés, l'invention étant compatible avec tout moteur asynchrone classique comportant un enroulement auxiliaire servant à son démarrage.

### Description détaillée

La figure 2 représente, de façon très schématique et sous forme de blocs, un mode de réalisation d'un circuit 10 de commande d'un triac T servant au démarrage d'un moteur asynchrone 5. En figure 2, le moteur 5 est symbolisé par son enroulement principal Lm, son enroulement secondaire Ls et un interrupteur KTh de protection thermique (KLIXON). L'interrupteur KTh relie un point commun 4 des enroulements Lm et Ls à une borne 51 destinée à être connectée, par l'intermédiaire d'un interrupteur K (par exemple, commandé par un thermostat Th), à une borne 1 d'application d'une tension d'alimentation alternative Vac entre des bornes 1 et 2. Les autres extrémités des enroulements Lm et Ls définissent des bornes 52 et 53 accessibles de l'extérieur du moteur 5. La borne 52 est destinée à être connectée directement à l'autre borne 2 d'application de la tension Vac. Comme précédemment, la borne 53 est reliée à la borne 2 au moyen d'un élément résistif 3 à coefficient de température positif (PTC) en série avec le triac T.

Selon ce mode de réalisation de l'invention, on utilise une mesure (bloc 11, LEVEL DET) d'une tension V53 présente entre la borne 53 et la masse, cette tension étant représentative de la tension V3 aux bornes de l'élément résistif 3 et du triac T en série, afin de la comparer par rapport à un seuil. Cette mesure s'effectue, par exemple, au moyen d'un pont diviseur résistif constitué de deux résistances R1 et R2 en série entre la borne 53 et la masse M, avec interposition d'une diode D1 de redressement dont l'anode est connectée à la borne 53. Un premier condensateur C1 sert optionnellement à filtrer d'éventuelles perturbations.

Lorsque la tension V53 atteint un seuil déterminé, l'information correspondante est verrouillée (bloc 12, LATCH) ou mémorisée. Une telle fonction est rendue nécessaire par le fait que le signal est variable avec la périodicité de la tension d'alimentation (généralement le secteur).

De préférence, le triac T est rendu passant à chaque passage par zéro de la tension V53 au moyen d'un bloc 13 (ZVS) de façon à limiter les perturbations électromagnétiques par la mise en conduction du triac T. Dans ce cas, le circuit 12 désactive le circuit 13 de façon à empêcher la remise en conduction du triac à chaque début d'alternance.

Un avantage qui ressort déjà de la représentation fonctionnelle de la figure 2 est que le circuit de l'invention se réactive automatiquement en cas de disparition de la tension d'alimentation Vac aux bornes des enroulements Lm et Ls, que ce soit par l'intermédiaire du thermostat Th de commande ou par la sécurité thermique KTh intégrée au moteur.

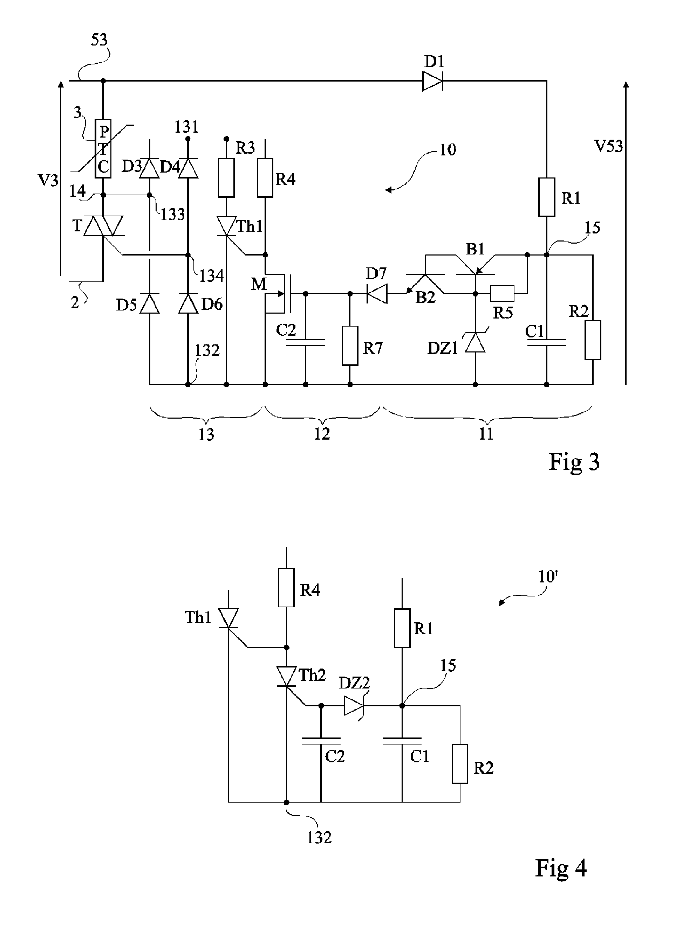

La figure 3 représente le schéma électrique détaillé d'un premier exemple de réalisation du circuit 10 de la figure 2. Selon cet exemple, le circuit 13 de commande du triac T au zéro de tension comporte un thyristor Th1 à gâchette de cathode dont l'anode est reliée, par une résistance R3, à une borne 131 de sortie positive d'un pont redresseur double alternance constitué de diodes D3, D4, D5 et D6, la cathode du thyristor Th1 étant reliée à une deuxième borne 132 de sortie redressée du pont. Une première borne 133 d'entrée alternative du pont (anode de la diode D3 et cathode de la diode D5) est reliée au point milieu 14 entre l'élément résistif 3 et le triac T. La deuxième borne 134 d'entrée alternative du pont est reliée à la gâchette du triac T. La gâchette du thyristor Th1 est reliée au point milieu d'une association en série d'une résistance R4 et d'un transistor MOS M connectée entre la borne 53 et la masse M (correspondant à la deuxième borne de sortie redressée 132 du pont).

En supposant le transistor M bloqué, dès que la tension V53 commence à croître au début de l'alternance tandis que l'élément résistif 3 est froid, un courant circule à la fois dans cet élément 3 et dans la résistance R4 (par l'intermédiaire du pont redresseur) pour amorcer le thyristor Th1. Une fois celui-ci amorcé, le courant circulant dans l'élément 3 et dans la résistance R3 sert à amorcer le triac T par l'intermédiaire de deux des diodes du pont de redressement, de la résistance R3 et du thyristor Th1. Le thyristor Th1 est choisi pour être sensible par rapport au triac T et la résistance R4 est choisie pour être supérieure à la résistance R3 de façon à réduire les pertes à l'état bloqué du triac T.

Quand l'élément résistif 3 est chaud, en supposant que le circuit 10 de commande du triac n'ouvre pas celui-ci une fois le moteur démarré, l'enroulement auxiliaire Ls est déconnecté grâce à la résistance élevée de l'élément 3. La sécurité apportée par l'élément 3 est donc préservée.

Le circuit de détection de niveaux 11 comporte le pont diviseur résistif constitué des résistances R1 et R2, le condensateur C1, et une diode Zener DZ1 dont la valeur seuil est choisie en fonction du seuil de déclenchement souhaité.

Le point milieu 15 entre les résistances R1 et R2 est relié à l'émetteur d'un premier transistor bipolaire de type PNP B1 dont le collecteur est relié à la base d'un deuxième transistor bipolaire B2 de type NPN, la base du transistor B1 étant reliée au collecteur du transistor B2 et également par l'intermédiaire d'une résistance R5 au point 15. Les transistors B1 et B2 et la résistance R5 forment un thyristor à gâchette d'anode du circuit de détection. L'anode de la diode DZ1 est connectée à la masse tandis que sa cathode est reliée à la base du transistor B1. Dès que la tension entre la borne 15 et la masse M excède la tension seuil de la diode DZ1 (en négligeant la chute de tension dans la résistance R5), le transistor B1 devient passant, ce qui rend passant le transistor B2 qui fournit un autoentretien de la conduction du transistor B1. La diode D1 fournit un redressement monoalternance pour la tension mesurée par le pont R1/R2.

Les transistors B1 et B2 se bloquent dès que le courant dans la diode D7 disparaît, quand la tension aux bornes du condensateur C1 devient inférieure à celle aux bornes du condensateur C2. Le circuit de verrouillage 12 est requis pour mémoriser la détection effectuée par le circuit 11 afin de rendre passant le transistor M et empêcher le redémarrage du circuit 13 en court-circuitant la gâchette et la cathode du thyristor Th1.

Le circuit de verrouillage comporte un condensateur C2 reliant la grille du transistor M à la masse en parallèle avec une résistance R7 de forte valeur. L'émetteur du transistor B2 est connecté à la grille du transistor M par une diode D7, l'anode de la diode D7 étant côté émetteur du transistor B2. Le condensateur C2 sert à mémoriser l'information détectée par le circuit 11 pour rendre le transistor M passant. La constante de temps de la cellule résistive et capacitive C2-R7 est choisie en fonction de la période de la tension alternative d'alimentation (donc de la tension V53) pour mémoriser l'information pendant au moins une période. Par exemple, pour une tension alternative de 50 Hz, on choisira une constante de temps de l'ordre de 20 millisecondes. La résistance R7 sert à décharger le condensateur C2 pour permettre une réinitialisation du circuit lorsque la tension V53 disparaît pendant une durée suffisante indiquant un besoin de redémarrage du moteur.

Le condensateur optionnel C1 du circuit 11 permet d'accélérer la charge du condensateur C2 à chaque alternance et sert à filtrer d'éventuelles perturbations présentes sur la tension V53.

A titre d'exemple particulier de réalisation, un montage tel que représenté en figure 3 est réalisé avec des composants ayant les valeurs suivantes : R1 = 510 kiloohms, R2 = 30 kilohoms, R3 = 620 ohms, R4 = R7 = 1 mégohms, R5 = 10 kiloohms, C1 = C2 = 10 nanoFarads, DZ1 = 15 volts, Vac = 220 volts - 50 Hz.

En variante, le transistor M est un transistor bipolaire et le circuit est adapté pour un déclenchement en courant.

La figure 4 représente une variante de réalisation du circuit de démarrage 10' dans laquelle le thyristor Th1 est bloqué non plus au moyen d'un transistor M mais au moyen d'un thyristor Th2 à gâchette de cathode reliant la gâchette du thyristor Th1 à la masse (borne 132). Une diode Zener DZ2 relie la gâchette du thyristor Th2 au point 15 (anode de la diode DZ2 côté thyristor Th2). Dès que la tension au point 15 devient supérieure à la tension seuil de la diode Zener DZ2, un courant circule dans la gâchette du thyristor Th2 pour l'amorcer. De préférence, un condensateur C2 entre la gâchette du thyristor Th2 et la masse stocke une énergie suffisante pour maintenir le thyristor Th2 passant pendant deux alternances alors que du courant n'est injecté qu'une alternance sur deux par le redressement monoalternance effectué grâce à la diode D1 (non représentée en figure 4).

Un avantage de la présente invention est que le circuit de commande préserve une mise à l'état passant du triac T au zéro de tension.

Un autre avantage de l'invention est que le circuit se réactive automatiquement en cas de disparition de la tension d'alimentation.

Un autre avantage de l'invention est qu'elle préserve la sécurité apportée par l'élément résistif 3 à coefficient de température positif en cas de défaillance du triac.

Un autre avantage de l'invention est qu'elle préserve le fonctionnement de la protection thermique du moteur.

Bien entendu, la présente invention est susceptible de diverses variantes et modifications qui apparaîtront à l'homme de l'art. En particulier, les dimensionnements des différents composants du circuit sont à adapter à l'application et notamment des caractéristiques du moteur et de la tension d'alimentation.

De plus, bien que l'invention ait été décrite en relation avec une résistance à coefficient de température positif, elle s'applique également au circuit de démarrage dans lequel cet élément est remplacé par un élément capacitif ou un circuit résistif et capacitif.

## Revendications

1. Circuit de commande d'un triac (T) destiné à être connecté en série avec un élément résistif à coefficient de température positif (3) ou au moins capacitif, et un enroulement (Ls) de démarrage d'un moteur asynchrone (5) pour alimentation par une tension alternative (Vac), **caractérisé en ce qu'**il comporte :
un circuit (11) de détection d'une tension (V53) représentative de la tension (V3) aux bornes de l'association en série dudit élément (3) et du triac (T), et de comparaison de cette tension par rapport à un seuil (DZ1, DZ2) ; et
un circuit (12) de blocage d'une remise en conduction du triac (T) quand ledit seuil est dépassé.

2. Circuit selon la revendication 1, dans lequel ledit élément (3) est une résistance à coefficient de température positif.

3. Circuit selon l'une quelconque des revendications 1 et 2, comportant en outre un circuit (13) de commande du triac (T) au zéro de tension, commandé par ledit circuit de blocage (12).

4. Circuit selon l'une quelconque des revendications 1 à 3, dans lequel ledit circuit de blocage (12) mémorise l'information comme quoi ledit seuil est dépassé.

5. Circuit selon l'une quelconque des revendications 1 à 4, dans lequel ledit circuit de détection et de comparaison (11) comporte :
un pont diviseur résistif (R1, R2) recevant ladite tension (V53) représentative de la tension (V3) aux bornes de l'association en série du triac (T) et dudit élément (3), redressée en mono alternance ; et
une diode Zener (DZ1, DZ2) dont la tension seuil fixe le déclenchement du circuit de blocage (12).

6. Circuit selon la revendication 5, dans lequel le circuit de blocage (12) comporte un interrupteur choisi parmi un transistor MOS (M), un thyristor à gâchette de cathode (Th2), un transistor bipolaire, pour connecter la gâchette du triac (T) à la masse.

7. Circuit selon la revendication 6, dans lequel ledit circuit de blocage (12) est dimensionné pour mémoriser le blocage pendant au moins deux alternances de la tension d'alimentation.

8. Circuit de commande d'un moteur asynchrone (5) pourvu d'un enroulement principal (Lm) et d'un enroulement auxiliaire (Ls) de démarrage, comportant au moins un interrupteur (K) d'alimentation en série avec lesdits enroulements, et un triac (T) en série avec un élément résistif à coefficient de température positif (3), ou au moins capacitif, et l'enroulement auxiliaire, **caractérisé en ce qu'**il comporte un circuit (10, 10') de commande du triac conforme à l'une quelconque des revendications 1 à 7.

9. Procédé de commande d'un triac (T) destiné à être connecté en série avec un élément résistif à coefficient de température positif (3) ou au moins capacitif, et un enroulement (Ls) de démarrage d'un moteur asynchrone, pour alimentation par une tension alternative (Vac), **caractérisé en ce qu'**il comporte les étapes de :
détecter une tension (V53) représentative de la tension (V3) aux bornes de l'association en série dudit élément (3) et du triac (T) ;
comparer cette tension détectée par rapport à un seuil (DZ1, DZ2) ; et
bloquer une remise en conduction du triac (T) quand ledit seuil est dépassé.

10. Procédé selon la revendication 9, dans lequel l'information comme quoi ledit seuil est dépassé est mémorisée pendant au moins deux alternances de la tension d'alimentation (Vac) pour maintenir le blocage du triac.
